# EUROPÄISCHE PATENTSCHRIFT

(11) **EP 2 641 367 B1**
(45) Veröffentlichungstag und Bekanntmachung des Hinweises auf die Patenterteilung: **17.12.2014**
(21) Anmeldenummer: 12703078.1
(22) Anmeldetag: 03.02.2012
(51) Int. Cl.: H04L 12/58, H04L 29/06, H04L 29/08

(54) **Verfahren und Vorrichtung zur Beglaubigung ortsbezogener Nachrichten**
Method and apparatus for authenticating location-related messages
Procédé et dispositif d'authentification de messages en fonction de la localisation

(30) Priorität: 21.02.2011 DE 102011004469
(43) Veröffentlichungstag der Anmeldung: 25.09.2013
(73) Patentinhaber: Siemens Aktiengesellschaft, 80333 München (DE)
(72) Erfinder: LUKAS, Klaus, 81739 München (DE); MÜLLER, Reiner, 86971 Peiting (DE); SOMMER, Elmar, 80337 München (DE)
(86) Internationale Anmeldenummer: PCT/EP2012/051826
(87) Internationale Veröffentlichungsnummer: WO 2012/113637

(56) Entgegenhaltungen:
- WO-A1-2011/006708
- US-A1- 2008 305 795
- US-A1- 2010 109 835

## Beschreibung

Die vorliegende Erfindung betrifft ein Verfahren und eine Vorrichtung zur Absicherung ortsbezogener Nachrichten.

Herkömmliche Technologien erlauben eine ortsbasierte Anzeige und Bereitstellung von Informationen und deren eventuell zusätzlich referenzierten weiteren Inhalten. Diese Informationen können einem vom Ersteller definierten Empfängerkreis zugeordnet werden, wobei der Empfänger ebenso der Ersteller sein kann. Hierbei spielt vor allem eine Authentifikation der Empfänger eine wichtige Rolle, wenn beispielsweise spezifische oder sicherheitsrelevante Nachrichten, die beispielsweise mit digitalen Postits vergleichbar sind, an bestimmten Orten hinterlassen werden. Die Authentifikation des Benutzers ist eine bekannte Problematik und kann beispielsweise mittels identitätsbasierter Systeme gelöst werden.

Es bestehen jedoch ebenso Szenarien, in denen darüber hinaus die Authentizität der ortsbasierten Nachricht eine wichtige Rolle spielt. So sind beispielsweise im Industrie- und Energieumfeld Warnmeldungen im Umkreis einer bestimmten kritischen Örtlichkeit relevant und deren Authentizität sehr wichtig. Ebenso sind in Krankenhaus- und Flughafeninfrastrukturen authentische ortsbasierte Informationen für Sicherheits- und Bedienpersonal notwendig und müssen von legitimierter Herkunft sein. In den beschriebenen Szenarien ist däbei ein häufiger Wechsel an Personal und Ausrüstung anzunehmen, so dass eine sehr große und sich dynamisch ändernde Benutzergruppe angenommen werden muss, die sich auf die Authentizität der Meldungen verlassen können muss.

Herkömmlicherweise wurde bei ortsbasierten Diensten vor allem eine identitätsbasierte Authentifikation eines Benutzers, das heißt bezogen auf Informationen wie dessen Namen oder Personalnummer, in den Vordergrund gestellt, um Nachrichten nicht an unberechtigte Personen weiter zu leiten.

Die US 2009/0077620 A1 offenbart ortsbasierte Zugriffseinschränkungen, bei denen Authentikation und Authentisierung auf Basis der vorliegenden Örtlichkeiten durchgeführt werden. Die Authentizität der Nachrichten wird durch eine korrekte Adressierung des ortsbasierten Dienstes impliziert.

Die US 2008/0305795 A1 offenbart ein Informationsbereitstellungssystem mit einem von einem Benutzer gehaltenen, mobilen Kommunikationsanschluss betriebenen Terminal und einem Informationsmeldegerät, das mit dem mobilen Kommunikationsanschluss kommunizieren kann. Dieser umfasst eine Punktidentifikationsinformationserfassungseinrichtung und eine Punkteintragungsbeantragungseinrichtung.

Die US 2010/0109835 A1 offenbart ein Gerät und ein Verfahren zur Bereitstellung ortsbasierter Sicherheit für eine Kommunikation zwischen einer fernen Vorrichtung und einer mobilen Vorrichtung mit einem globalen Positionsbestimmungssystemempfänger zur Bestimmung dessen augenblicklicher Position.

Ferner sind generell identitätsbasierte PKI-Verfahren, das heißt Public Key Infrastrukturen, das heißt Infrastrukturen mit öffentlichen Schlüsseln, bekannt, welche die Identität des Benutzers zum privaten Schlüssel in gesicherter Weise zuordnen.

Es ist Aufgabe der vorliegenden Erfindung ein Verfahren und eine Vorrichtung zur Absicherung von Nachrichten bereitzustellen, die von einem Anbieter an eine Vielzahl von zeitlich wechselnden Empfängerpersonen und Empfängereinrichtungen in jeweils einer Vielzahl von Lokalitätsräumen übertragen werden. Beispielsweise sollen im Industrie-, Energie-, Flughafen- oder Krankenhausumfeld authentische ortrelevante Informationen von legitimierter Herkunft lediglich für einen autorisierten Empfängerpersonenkreis in einem relevanten Lokalitätsraum zugreifbar sein.

Ein Lokalitätsraum ist hier ein Raum, der klar hinsichtlich seiner räumlichen Ausdehnungen begrenzt und mittels entsprechender Punkte, Linien oder Flächen bestimmbar ist. Ein Lokalitätsraum kann als mathematischer Punkt, eine mathematische Fläche oder als ein mathematischer Raum in einem dreidimensionalen Koordinatensystem bestimmt sein. Ein Lokalitätsraum kann mittels Grenzpunkten, Grenzlinien oder Grenzflächen bestimmt sein. Konkrete Beispiele für Lokalitätsräume können bestimmte Räume oder Stockwerke in Gebäuden sein. Derartige Gebäude können Gebäude von Fabriken, Kraftwerke, Flughäfen oder Krankenhäuser sein. Ein Lokalitätsraum kann von einer Vielzahl von zeitlich wechselnden Personen betreten sein. Ebenso kann eine Vielzahl von verschiedenen Kommunikationseinrichtungen von den Personen verwendet werden.

Die Aufgabe wird durch ein Verfahren gemäß dem Hauptanspruch und eine Vorrichtung gemäß dem Nebenanspruch gelöst.

Gemäß einem ersten Aspekt wird ein Verfahren zur Absicherung einer Vielzahl von ortsbezogenen Nachrichten, die von mindestens einem Anbieter an eine Vielzahl von zeitlich wechselnden Empfänger und/oder zeitlich wechselnden Empfängereinrichtungen in mindestens einem bestimmten Lokalitätsraum übertragen werden, mit den folgenden Schritten beansprucht. Mittels des Anbieters ausgeführtes Übertragen der jeweils eine Signatur zum Nachweis der Urheberschaft des jeweiligen Anbieters und dessen Zugehörigkeit zu der jeweiligen Nachricht aufweisenden Nachrichten zu mindestens einem bestimmten Lokalitätsraum. Mittels mindestens eines Schlüsselbereitstellers ausgeführtes Bereitstellen von für den jeweilig bestimmten Lokalitätsraum gültigen öffentlichen Schlüsselzertifikaten für den jeweilig bestimmten Lokalitätsraum. Mittels der Schüsselzertifikate ausgeführtes Überprüfen der Signatur jeder empfangenen Nachricht und Verifizieren oder Falsifizieren der jeweiligen Nachricht entsprechend einem Ergebnis des Überprüfens.

Gemäß einem zweiten Aspekt wird eine Vorrichtung zur Ausführung eines Verfahrens zur Absicherung einer Vielzahl von ortsbezogener Nachrichten mit den folgenden Einrichtungen beansprucht. Mindestens eine Anbieterübertragungseinrichtung zur Übertragung der Nachrichten an eine Vielzahl von zeitlich wechselnden Empfängerpersonen und/oder zeitlich wechselnden Empfängereinrichtungen in mindestens einem bestimmten Lokalitätsraum, wobei jede Nachricht eine Signatur zum Nachweis der Urheberschaft des jeweiligen Anbieters und dessen Zugehörigkeit zu der jeweiligen Nachricht aufweisenden Nachricht aufweist. Mindestens eine Schlüsselbereitstellerübertragungseinrichtung zum Bereitstellen von für den jeweiligen bestimmten Lokalitätsraum gültigen öffentlichen Schlüsselzertifikaten für den jeweilig bestimmten Lokalitätsraum. Eine Überprüfungseinrichtung zum mittels der Schlüsselzertifikate ausgeführten Überprüfen der Signatur jeder empfangenen Nachricht und Verifizieren oder Falsifizieren der jeweiligen Nachricht entsprechend einem Ergebnis des Überprüfens.

Ein erfindungsgemäßes Verfahren ermöglicht eine Bereitstellung authentischer ortsbezogener Nachrichten durch eine Verwendung von ortsbasierten Schlüsselinfrastrukturen. Nachrichten werden mit einem identitätsbasierten Schlüssel geschützt und ein örtlicher Gültigkeitsbereich des Schlüssels wird festgelegt.

Für eine Verwendung von ortsbasierten Dienstleistungen in kritischen Infrastrukturen und sensiblen Umgebungen ist ein dezidiertes Sicherheitskonzept notwendig. Aufgrund der Ortsbezogenheit hinterlegter Nachrichten und Informationen muss ein Sicherheitskonzept ebenso ortsbasiert ausgelegt werden. Ein derartiges Sicherheitskonzept kann mit einem erfindungsgemäßen Verfahren und einer erfindungsgemäßen Vorrichtung realisiert werden.

Erfindungsgemäß ist erkannt worden, dass zum Schutz ortsbasierter Nachrichten ortsbasierte Informationen in Schlüsselinfrastrukturen verwendet werden. Auf dies Weise können Schlüssel ortsbezogen ausgestellt werden, die damit in einer bestimmten definierten örtlichen Umgebung eines Gültigkeitsbereichs einer hinterlegten Nachricht gelten. Die mit diesem Schlüsselmaterial geschützten Informationen werden auf diese Weise ebenso an die jeweilige Ortsgültigkeit gebunden.

Eine Verwendung eines erfindungsgemäßen Verfahrens oder einer erfindungsgemäßen Vorrichtung kann sich auf alle ortsbasierten Dienstleistungen erstrecken, die beispielsweise in Infrastruktur- und Industrieumfeld Anwendung finden.

Es können komplexe geografische Einheiten mit einem erfindungsgemäßen Verfahren detailliert nachgebildet werden, beispielsweise Gebäude, Industrieareale oder Flughafeninfrastrukturen, zum Schutz von gefälschten Nachrichten von außerhalb.

Eine Verwendung eines Verfahrens mit einem öffentlichen Schlüssel, einem sogenannten Public Key-Verfahren, ermöglicht eine Zugänglichkeit für breite und dynamisch sich ändernde Benutzergruppen. Infrastrukturen mit öffentlichen Schlüsseln (public key infrastructures; PKIs) ermöglichen zusätzlich einen fließenden Übergang von ortsbasierten in identitätsbasierte Infrastrukturen.

Weitere vorteilhafte Ausgestaltungen werden in Verbindung mit den Unteransprüchen beansprucht.

Gemäß einer vorteilhaften Ausgestaltung können den Schlüsselzertifikaten Zeitdauern zugeordnet sein, zu denen die Schlüsselzertifikate gültig sind.

Gemäß einer weiteren vorteilhaften Ausgestaltung können die Zeitdauern regelmäßig sein und/oder sich täglich wiederholen.

Gemäß einer weiteren Ausgestaltung kann den Schlüsselzertifikaten jeweils ein Orts-Zeit-Verlauf zugeordnet sein, zu dem das Schlüsselzertifikat gültig ist. Alternativ oder kumulativ kann den Schlüsselzertifikaten ein zeitlich sich ändernder Lokalitätsraum zugeordnet sein, für den die Schlüsselzertifikate gültig sind. Ein Lokalitätsraum kann sich beispielsweise zeitlich hinsichtlich seiner Position und/oder seiner Größe ändern.

Gemäß einer weiteren vorteilhaften Ausgestaltung können den Schlüsselzertifikaten jeweils zusätzliche Informationen zugeordnet sein, wo diese Schlüsselzertifikate und/oder weitere Schlüsselzertifikate gültig sind.

Gemäß einer weiteren vorteilhaften Ausgestaltung kann einem Schlüsselzertifikat jeweils eine zusätzliche Information zugeordnet sein, bei welcher Art eines Übertragens dieses Schlüsselzertifikat gültig ist.

Gemäß einer weiteren vorteilhaften Ausgestaltung kann das mittels des Anbieters ausgeführte Übertragen der Nachrichten zu dem mindestens einen Lokalitätsraum nach einem mittels einer Empfängereinrichtung ausgeführten ersten Anfragen an den Anbieter erfolgen.

Gemäß einer weiteren vorteilhaften Ausgestaltung kann das erste Anfragen umfassen, ob für den Lokalitätsraum zu einem Zeitpunkt Nachrichten vorliegen.

Gemäß einer weiteren vorteilhaften Ausgestaltung kann das mittels des einen Schlüsselbereitstellers ausgeführte Bereitstellen von für den jeweiligen Lokalitätsraum gültigen öffentlichen Schlüsselzertifikaten für den jeweiligen Lokalitätsraum nach einem mittels einer Empfängereinrichtung ausgeführten zweiten Anfragen an den Schlüsselbereitsteller erfolgen.

Gemäß einer weiteren vorteilhaften Ausgestaltung kann das zweite Anfragen umfassen, ob für den Lokalitätsraum zu einem Zeitpunkt gültige öffentliche Schlüsselzertifikate vorliegen.

Gemäß einer weiteren vorteilhaften Ausgestaltung kann ein Prüfen der Gültigkeit der bereitgestellten Schlüsselzertifikate hinsichtlich des richtigen Lokalitätsraums ausgeführt werden.

Gemäß einer weiteren vorteilhaften Ausgestaltung kann ein Prüfen der Gültigkeit der bereitgestellten Schlüsselzertifikate hinsichtlich der richtigen Zeitdauer ausgeführt werden.

Gemäß einer weiteren vorteilhaften Ausgestaltung kann das Schlüsselzertifikat eine Signatur zum Nachweis der Urheberschaft des jeweiligen Schlüsselbereitstellers und dessen Zugehörigkeit zu dem jeweiligen Schlüsselzertifikat aufweisen. Gemäß einer weiteren vorteilhaften Ausgestaltung kann der Anbieter der Schlüsselbereitsteller sein.

Gemäß einer weiteren vorteilhaften Ausgestaltung kann das für einen Lokalitätsraum gültige Schlüsselzertifikat eine Referenz auf eine Lokalitätsbeschreibungsstruktur zur Identifikation des Lokalitätsraums in einer Vielzahl von Lokalitätsräumen aufweisen.

Gemäß einer weiteren vorteilhaften Ausgestaltung kann die Lokalitätsbeschreibungsstruktur eine um absolute Ortskoordinaten ergänzte Vektorgrafik sein.

Gemäß einer weiteren vorteilhaften Ausgestaltung kann die Referenz eine Signatur zum Nachweis der Urheberschaft der Lokalitätsbeschreibungsstruktur und deren Zugehörigkeit zu der jeweiligen Referenz aufweisen.

Gemäß einer weiteren vorteilhaften Ausgestaltung kann die Lokalitätsbeschreibungsstruktur jedem für einen Lokalitätsraum gültigen Schlüsselzertifikat zusätzlich einen weiteren Sicherheitsalgorithmus zuordnen.

Gemäß einer weiteren vorteilhaften Ausgestaltung kann das Bereitstellen von für den jeweiligen Lokalitätsraum gültigen öffentlichen Schlüsselzertifikaten für den jeweiligen Lokalitätsraum lediglich ausgeführt werden, wenn zusätzlich eine Identität eine Empfängerperson und/oder einer Empfängereinrichtung verifiziert wurde.

Gemäß einer weiteren vorteilhaften Ausgestaltung kann die Vielzahl von ortsbezogenen Nachrichten dynamische Daten zur Ausführung von Programmen in jeweiligen Empfängereinrichtungen in den bestimmten Lokalitätsräumen sein.

Gemäß einer weiteren vorteilhaften Ausgestaltung kann eine Ausführung eines Programms ein autorisiertes Senden mittels einer der jeweiligen Empfängereinrichtung zugeordneten Sendeeinrichtung umfassen.

Gemäß einer weiteren vorteilhaften Ausgestaltung kann eine der Empfängereinrichtung zugeordnete Anfrageeinrichtung zum Anfragen an dem Anbieter bereitgestellt sein, ob für die Empfängereinrichtung innerhalb eines Lokalitätsraumes zu einem Zeitpunkt Nachrichten vorliegen.

Gemäß einer weiteren vorteilhaften Ausgestaltung kann die Anbieterübertragungseinrichtung zum auf das Anfragen ausgeführten Senden vorliegender Nachrichten bereitgestellt sein, wobei diese um eine Signatur zum Nachweis der Urheberschaft des Anbieters und dessen Zugehörigkeit zu den Nachrichten ergänzt sein können.

Gemäß einer weiteren vorteilhaften Ausgestaltung kann die der Empfängereinrichtung zugeordnete Anfrageeinrichtung zum Anfragen bei einem Schlüsselersteller bereitgestellt sein, ob für den Lokalitätsraum zu dem Zeitpunkt gültige, öffentliche Schlüsselzertifikate vorliegen.

Gemäß einer weiteren vorteilhaften Ausgestaltung kann die Schlüsselbereitstellungseinrichtung zum auf das Anfragen ausgeführten Übertragen oder Senden von für den Lokalitätsraum gültigen öffentlichen Schlüsselzertifikaten zu der Empfängereinrichtung bereitgestellt sein.

Gemäß einer weiteren vorteilhaften Ausgestaltung kann die Empfängereinrichtung zum mittels der Schlüsselzertifikate ausgeführten Überprüfen der Signatur jeder empfangenen Nachricht um Verifizieren oder Falsifizieren der jeweiligen Nachricht entsprechend mit einem Ergebnis des Überprüfens bereit gestellt sein.

Gemäß einer weiteren vorteilhaften Ausgestaltung kann die Empfängereinrichtung zum Prüfen der Gültigkeit der empfangenen Schlüsselzertifikate hinsichtlich des richtigen Lokalitätsraums und des richtigen Zeitpunkts bereitgestellt sein.

Die vorliegende Erfindung wird anhand von Ausführungsbeispielen in Verbindung mit den Figuren näher beschrieben. Es zeigen:
- Figur 1: ein erstes Ausführungsbeispiel eines erfindungsgemäßen Verfahrens;
- Figur 2: ein Ausführungsbeispiel einer signierten Referenz auf eine Lokalitätsbeschreibungsstruktur.

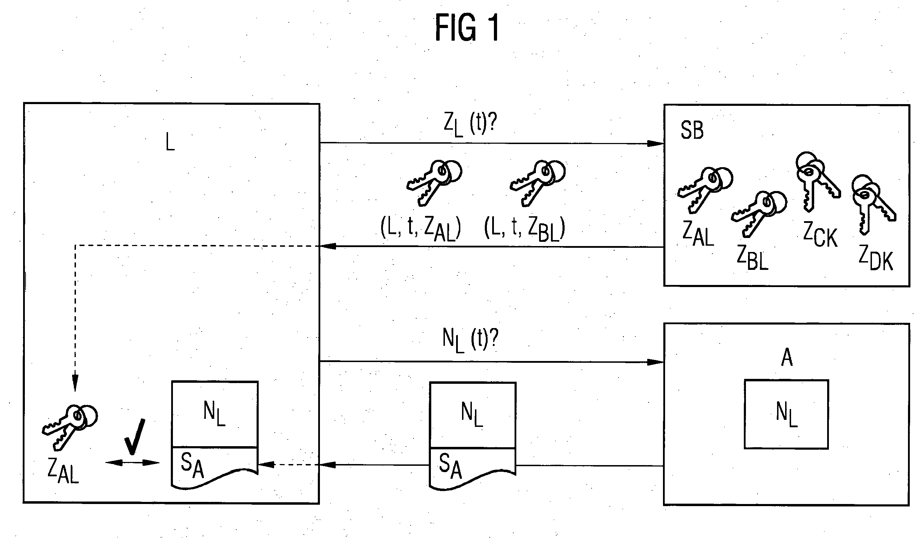

Figur 1 zeigt ein Ausführungsbeispiel eines erfindungsgemäßen Verfahrens. Figur 1 zeigt als Ausführungsbeispiel eine Verifikation einer digitalen Graffiti-Nachricht mittels ortsbasierter Schlüsselinfrastrukturen. Wird an einer bestimmten Lokalität bzw. einem bestimmten Lokalitätsraum L beispielsweise eine sogenannte Digitale Graffiti-Nachricht N_{L} vom Anbieter A hinterlegt, wird diese um eine Signatur S_{A} ergänzt. Ein Empfänger E kann nun über einen Schlüsseldienst die an der Örtlichkeit L zu einem Zeitpunkt t gültigen öffentlichen Schlüssel anfragen, und erhält beispielsweise ein Schlüsselzertifikat Z_{AL} bei einer Verifikation der Nachricht N_{L} prüft der Empfänger E eine Gültigkeit des Schlüsselzertifikats Z_{AL} hinsichtlich der Örtlichkeit L sowie weitere herkömmliche Parameter, wie beispielsweise eine zeitliche Gültigkeit des Schlüsselzertifikats. Ergibt eine Prüfung des Zertifikats und der Nachrichtensignatur, dass die jeweilige Nachricht N_{L} verifiziert wird, so verarbeitet der Empfänger E im Lokalitätsraum L die Nachricht N_{L}. Es kann beispielsweise der Inhalt angezeigt bzw. eine multimediale Nachricht ausgelesen werden. Gemäß Figur 1 kann in einem ersten Schritt eine Anfrage eines Empfängers E in einem bestimmten Lokalitätsraum L an einen Anbieter A erfolgen, ob Nachrichten N für den Lokalitätsraum L zu einem Zeitpunkt t vorliegen. Eine derartige Anfrage ist in Figur 1 mit N_{L}(t)? gekennzeichnet. Im Anschluss an eine derartige Anfrage beim Anbieter A sendet er in einem zweiten Schritt eine mit einer digitalen Signatur S_{A} signierte Nachricht N_{L} für den Zeitpunkt t für den Lokalitätsraum L bestimmt ist. Die signierte Nachricht N_{L} kann beispielsweise in dem Lokalitätsraum L abgespeichert oder direkt durch den Empfänger E ausgelesen werden, nachdem die folgenden zwei Schritte durchgeführt worden sind. Mit dem dritten Schritt erfolgt eine Anfrage, ob Schlüsselzertifikate Z für den anfragenden Lokalitätsraum L für einen Zeitpunkt t vorliegen. Eine derartige Anfrage bei einem ortsbasierten Schlüsselservice OS ist mit Z_{L}(t)? ausgedrückt. Auf eine derartige Anfrage überträgt oder sendet der ortsbasierte Schlüsselservice OS bzw. der Schlüsselbereitsteller SB entsprechende Schlüsselzertifikate (L, t, Z_{AL}) und beispielsweise zusätzlich (L, t, Z_{BL}). Grundsätzlich können Schlüsselzertifikate in jeder technischen Ausführungsform in dem entsprechenden Lokalitätsraum bereitgestellt werden. Beispielsweise können Schlüsselzertifikate im Lokalitätsraum bereits hinterlegt oder abgespeichert sein. Liegen die erforderlichen Schlüsselzertifikate, hier konkret Z_{AL} für die mit der digitalen Signatur S_{A} signierte Nachricht N_{L} in dem bestimmten Lokalitätsraum L vor, kann die verifizierte Nachricht N_{L} verifiziert und ausgelesen werden. Die im Schlüsselzertifikat eingetragene Ortsinformation kann ebenso in Verbindung mit zugeordneten Zeiten gekoppelt werden, so dass die Information an dem Ort nur zu bestimmten Zeiten validiert werden kann. Ferner können die Orts- und Zeitkopplungen ebenso als Wegstrecken, als eine Art "Moving Certificates" ausgelegt sein, so dass sich die Information zu bestimmten Zeiten an bestimmten Orten bewegen kann und nur dort jeweils gültig ist. Bestimmte Orte können mittels eines definierten Volumens bestimmt werden, beispielsweise als ein bestimmter Bereich in einem bestimmten Stockwerk, für das ein Schlüsselzertifikat Z gültig ist. Ein Lokalitätsraum beziehungsweise ein Lokalitätsort oder ein Lokalitätsvolumen muss nicht statisch mit absoluten Koordinaten beschrieben werden und fest in einer definierten Umgebung positioniert sein. Lokalitätsraum oder Lokalitätsvolumen können sich ebenso zeitlich, beispielsweise hinsichtlich Position und Größe sowie Form, verändern. Beispiele können ein Paket in einem Flugzeug oder Auto oder ein Digital Graffiti sein, das mit einer Position eines fahrenden Autos verknüpft ist. Auf diese Weise können beispielweise Fehlermeldungen oder Verbrauchswerte des Autos erfasst werden. Die Position eines Lokalitätsraums kann also mit dem Auto und dessen Position verknüpft sein.

Die ortsbasierte Bezogenheit erlaubt auch weitergehende Informationen im Schlüsselzertifikat, wie beispielsweise eine örtliche Ausbreitung, einen Warnbereich, in dem die Verifikation zwar erfolgreich ist, aber dem Empfänger E bzw. Benutzer eine Warnmitteilung angezeigt wird, dass sich das Schlüsselzertifikat am Rande eines erlaubten Bereichs befindet, Höheninformation, beispielsweise eine Gültigkeit eines Zertifikats lediglich auf einer Etage, Referenzen auf Zertifikate umliegender Zellen bzw. Volumina, Überlappungsstrukturen, bei denen zwei verschiedene Schlüsselzertifikate an einer Stelle gültig sind, Zugriffsdienst und -Infrastrukturinformationen, wenn beispielsweise an einer bestimmten Stelle eine digitale Graffiti-Nachricht lediglich gültig ist, wenn diese über eine sichere WLAN-Verbindung erhalten wurde.

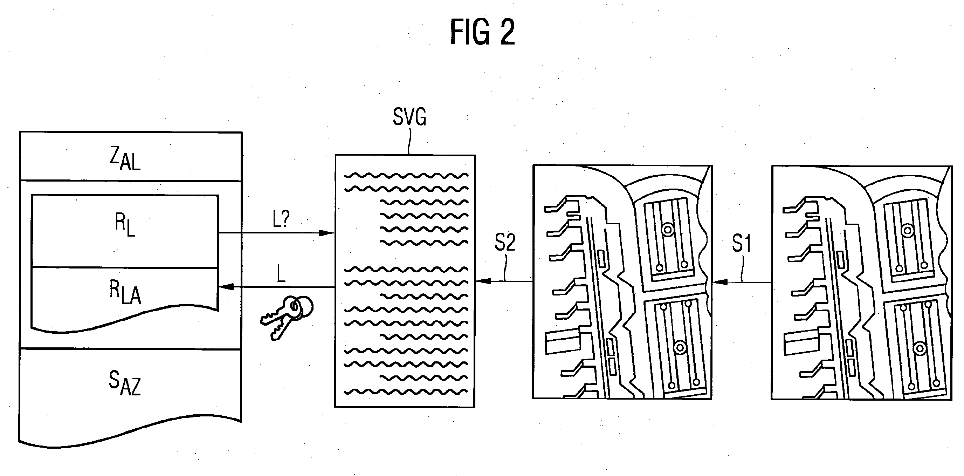

Figur 2 zeigt ein Schlüsselzertifikat Z_{AL}, das lediglich für einen Lokalitätsraum L gültig ist, der mittels einer Referenz R_{L} auf eine Ortsbeschreibung bestimmt worden ist. Eine derartige Ortsbeschreibung kann als Lokalitätsbeschreibungsstruktur bereitgestellt sein, die beispielsweise als Vektorgraphik bereitgestellt ist, die um absolute Ortskoordinaten ergänzt ist. Eine derartige scalable Vectorgraphic SVG ist eine mathematische Lokalitätsbeschreibungsstruktur, die mittels abstrakter Daten über eine Gesamtheit von Lokalitätsräumen L aus geographischen Daten der Gesamtheit einer Vielzahl von Lokalitätsräumen L abgeleitet werden kann. Figur 2 zeigt auf der rechten Seite einen Flughafenkomplex, dessen geographische Daten vorliegen. In einem ersten Schritt S1 werden die geographischen Daten in abstrakte Daten der Gesamtheit der Lokalitätsräume L transformiert, die in einem zweiten Schritt S2 beispielsweise in die skalierbare Vektorgraphik SVG als Beschreibung der Gesamtheit der Vielzahl der Lokalitätsräume L ausgedrückt wird. Mittels der Referenz R_{L} auf die Lokalitätsbeschreibungsstruktur SVG wird der Ort bzw. die Lokalität L bestimmt, für die das Zertifikat Z_{AL} gültig ist. Zusätzlich kann das Schlüsselzertifikat Z_{AL} mit einer Signatur S_{AZ} signiert sein. Ebenso kann die Referenz R_{L} mit einer Signatur S_{AR} signiert sein. Auf diese Weise kann eine Urheberschaft eines jeweiligen Anbieters A und dessen Zugehörigkeit zu der jeweiligen Signatur S_{AZ} nachgewiesen werden. Ebenso kann eine Urheberschaft einer jeweiligen Ortsbeschreibung und deren Zugehörigkeit zu der jeweiligen Referenz R_{L} nachgewiesen werden. D.h. um ebenso feiner granulare oder örtlich komplexer abzugrenzende Gebiete in Schlüsselzertifikate abgrenzen zu können, werden Räumlichkeiten durch signierte Strukturen separat beschrieben und signiert. Eine derartige Ausführungsform zeigt Figur 2. Derartige Gebäudestrukturen werden dann nur einmal bereitgestellt und von den jeweiligen Schlüsselzertifikaten referenziert. Der Vorteil ist, dass die komplexen Strukturen zur Ortsbeschreibung lediglich einmal heruntergeladen und verifiziert werden müssen. In den Schlüsselzertifikaten muss dann lediglich noch jeweils die Referenz geprüft werden. Als Beschreibungsformat können beispielsweise Vektorgraphik-Formate wie SVG (skalierbare Vektorgraphiken) dienen, die um absolute Ortskoordinaten ergänzt werden können. Figur 2 zeigt signierte Referenzen auf Lokalitätsbeschreibungen. Eine Ortsbeschreibung kann des Weiteren ebenso mit einer unterschiedlichen Sicherheits- Policy gekoppelt werden, so dass beispielsweise das an weiter äußeren Bereichen einer Bank oder eines Flughafens schwächere Algorithmen oder Sicherheitsanforderungen zum Tragen kommen, in kritischeren inneren Infrastrukturen aber höhere Sicherheitsanforderungen gelten. Eine gegenseitige Zertifizierung von identitätsbasierten und ortsbasierten Zertifizierungsdiensten kann beispielsweise mittels einer Cross Zertifikation oder mittels einer gemeinsamen Root-Zertifizierungsinstanz erfolgen. Ein Hinterlegen von Ortsinformationen und Ortsreferenzen kann beispielsweise in sog. X.509 Zertifikaten mittels ortsspezifischer Attribute erfolgen, die lediglich von Verifikationsfunktionen ausgewertet werden, welche Lokalitätsinformationen unterstützen. Neben der Authentizität von statischer Information spielt ebenso die Authentizität dynamischer Daten eine Rolle, wie beispielsweise sog. Applets, die lediglich an bestimmten Orten bzw. zu bestimmten Zeiten ausgeführt werden solle. So können beispielsweise Signälisierungssysteme zukünftig ebenso als Applet auf mobilen Endgeräten heruntergeladen werden. Bei Notfällen erhalten dann diese Applets Informationen über Feuer oder Amokläufe. Damit die Information nur an den richtigen Orten und nicht von unberechtigten Personen eingespielt werden können, ist eine Absicherung mittels erfindungsgemäßer Verfahren ausführbar.

## Patentansprüche

1. Verfahren zur Absicherung einer Vielzahl von ortsbezogenen Nachrichten (N), die von mindestens einem Anbieter (A) an eine Vielzahl von zeitlich wechselnden Empfängerpersonen und/oder zeitlich wechselnden Empfängereinrichtungen (E) in mindestens einem bestimmten Lokalitätsraum (L) übertragen werden, **gekennzeichnet durch** die Schritte
- mittels des Anbieters (A) ausgeführtes Übertragen der jeweils eine Signatur (S) zum Nachweis der Urheberschaft des jeweiligen Anbieters (A) und dessen Zugehörigkeit zu der jeweiligen Nachricht (N) aufweisenden Nachrichten (N) zu mindestens einem bestimmten Lokalitätsraum (L);
- mittels mindestens eines Schlüsselbereitstellers (SB) ausgeführtes Bereitstellen von für den jeweilig bestimmten Lokalitätsraum (L) gültigen öffentlichen Schlüsselzertifikaten (Z) für den jeweilig bestimmten Lokalitätsraum (L);
- mittels der Schlüsselzertifikate (Z) ausgeführtes Überprüfen der Signatur (S) jeder empfangenen Nachricht (N) und Verifizieren oder Falsifizieren der jeweiligen Nachricht (N) entsprechend einem Ergebnis des Überprüfens.

2. Verfahren nach Anspruch 1,
**dadurch gekennzeichnet, dass**
den Schlüsselzertifikaten (Z) Zeitendauern zugeordnet sind, zu denen die Schlüsselzertifikate (Z) gültig sind.

3. Verfahren nach Anspruch 2,
**dadurch gekennzeichnet, dass**
die Zeitdauern regelmäßig sind und/oder sich täglich wiederholen.

4. Verfahren nach einem der vorangehenden Ansprüche,
**dadurch gekennzeichnet, dass**
den Schlüsselzertifikaten (Z) ein Orts-Zeit-Verlauf oder eine zeitliche Änderung des Lokalitätsraums, beispielsweise in Größe und Position, zugeordnet ist, zu dem die Schlüsselzertifikate (Z) gültig sind.

5. Verfahren nach einem der vorangehenden Ansprüche,
**dadurch gekennzeichnet, dass**
den Schlüsselzertifikaten (Z) zusätzliche Informationen zugeordnet sind, wo diese Schlüsselzertifikate (Z) und/oder weitere Schlüsselzertifikate (Z) gültig sind.

6. Verfahren nach einem der vorangehenden Ansprüche,
**dadurch gekennzeichnet, dass**
den Schlüsselzertifikaten (Z) eine zusätzliche Information zugeordnet ist, mit welcher Art des Übertragens diese Schlüsselzertifikate (Z) gültig sind.

7. Verfahren nach einem der vorangehenden Ansprüche,
**dadurch gekennzeichnet, dass**
das mittels des Anbieters (A) ausgeführte Übertragen der Nachrichten (N) zu dem mindestens einen Lokalitätsraum (L) nach einem mittels einer Empfängereinrichtung (E) ausgeführten ersten Anfragen an den Anbieter (A) erfolgt.

8. Verfahren nach Anspruch 7,
**dadurch gekennzeichnet, dass**
das erste Anfragen umfasst, ob für den Lokalitätsraum (L) zu einem Zeitpunkt (t) Nachrichten (N) vorliegen.

9. Verfahren nach einem der vorangehenden Ansprüche,
**dadurch gekennzeichnet, dass**
das mittels des einen Schlüsselbereitstellers (SB) ausgeführte Bereitstellen von für den jeweiligen Lokalitätsraum (L) gültigen öffentlichen Schlüsselzertifikaten (Z) mittels deren Übertragen zu dem jeweiligen Lokalitätsraum (L) nach einem mittels einer Empfängereinrichtung (E) ausgeführten zweiten Anfragen an den Schlüsselbereisteller (SB) erfolgt.

10. Verfahren nach Anspruch 9,
**dadurch gekennzeichnet, dass**
das zweite Anfragen umfasst, ob für den Lokalitätsraum (L) zu einem Zeitpunkt (t) gültige öffentliche Schlüsselzertifikate (Z) vorliegen.

11. Verfahren nach einem der vorangehenden Ansprüche,
**gekennzeichnet durch**
Prüfen der Gültigkeit der bereitgestellten Schlüsselzertifikate (Z) hinsichtlich des richtigen Lokalitätsraums (L).

12. Verfahren nach einem der vorangehenden Ansprüche 2 bis 11, **gekennzeichnet durch**
Prüfen der Gültigkeit der bereitgestellten Schlüsselzertifikate (Z) hinsichtlich der richtigen Zeitdauer.

13. Verfahren nach einem der vorangehenden Ansprüche,
**dadurch gekennzeichnet, dass**
das Schlüsselzertifikat (Z) eine Signatur (S) zum Nachweis der Urheberschaft des jeweiligen Schlüsselbereitstellers (SB) und dessen Zugehörigkeit zu dem jeweiligen Schlüsselzertifikat (Z) aufweist.

14. Verfahren nach einem der vorangehenden Ansprüche,
**dadurch gekennzeichnet, dass**
der Anbieter (A) der Schlüsselbereisteller (SB) ist.

15. Verfahren nach einem der vorangehenden Ansprüche,
**dadurch gekennzeichnet, dass**
das für einen Lokalitätsraum (L) gültige Schlüsselzertifikat (Z) eine Referenz (R) auf eine Lokalitätsbeschreibungsstruktur zur Identifikation des Lokalitätsraum (L) in einer Vielzahl von Lokalitätsräumen (L) aufweist.

16. Verfahren nach Anspruch 15,
**dadurch gekennzeichnet, dass**
die Lokalitätsbeschreibungsstruktur eine um absolute OrtsKoordinaten ergänzte Vektorgraphik ist.

17. Verfahren nach Anspruch 15 oder 16,
**dadurch gekennzeichnet, dass**
die Referenz (R) eine Signatur (S) zum Nachweis der Urheberschaft der Lokalitätsbeschreibungsstruktur und deren Zugehörigkeit zu der jeweiligen Referenz (R) aufweist.

18. verfahren nach einem der vorangehenden Ansprüche 15 bis 17, **dadurch gekennzeichnet, dass**
die Lokalitätsbeschreibungsstruktür jedem für einen Lokalitätsraum (L) gültigen Schlüsselzertifikat (Z) zusätzlich einen weiteren Sicherheitsalgorithmus zuordnet.

19. Verfahren nach einem der vorangehenden Ansprüche,
**dadurch gekennzeichnet, dass**
das Bereitstellen von für den jeweiligen Lokalitätsraum (L) gültigen öffentlichen Schlüsselzertifikaten (Z) für den jeweiligen Lokalitätsraum (L) lediglich ausgeführt wird, wenn zusätzlich eine Identität einer Empfängerperson und/oder einer Empfängereinrichtung (E) verifiziert wurde.

20. Verfahren nach einem der vorangehenden Ansprüche,
**dadurch gekennzeichnet, dass**
die Vielzahl von ortsbezogenen Nachrichten (N) dynamische Daten zur Ausführung von Programmen in jeweiligen Empfängereinrichtungen in den bestimmten Lokalitätsräumen (L) sind.

21. Verfahren nach Anspruch 20,
**dadurch gekennzeichnet, dass**
eine Ausführung eines Programms ein autorisiertes Senden mittels einer der jeweiligen Empfängereinrichtung zugeordneten Sendeeinrichtung umfasst.

22. Vorrichtung zur Ausführung eines Verfahrens zu Absicherung einer Vielzahl von ortsbezogenen Nachrichten (N) nach einem der vorangehenden Ansprüche, **gekennzeichnet durch**
- mindestens eine Anbieterübertragungseinrichtung (A) zur Übertragung der Nachrichten (N) an eine Vielzahl von zeitlich wechselnden Empfängerpersonen und/oder zeitlich wechselnden Empfängereinrichtungen (E) in mindestens einem bestimmten Lokalitätsraum (L), wobei jede Nachricht (N) eine Signatur (S) zum Nachweis der Urheberschaft des jeweiligen Anbieters (A) und dessen Zugehörigkeit zu der jeweiligen Nachricht (N) aufweisenden Nachrichten (N) aufweist;
- mindestens eine Schlüsselbereitstellungseinrichtung (SB) zum Bereitstellen von für den jeweilig bestimmten Lokalitätsraum (L) gültigen öffentlichen Schlüsselzertifikaten (Z) für den jeweilig bestimmten Lokalitätsraum (L);
- eine Überprüfungseinrichtung zum mittels der Schlüsselzertifikate (Z) ausgeführten Überprüfen der Signatur (S) jeder empfangenen Nachricht (N) und Verifizieren oder Falsifizieren der jeweiligen Nachricht (N) entsprechend einem Ergebnis des Überprüfens.

23. Vorrichtung nach Anspruch 22,
**gekennzeichnet durch**
eine der Empfängereinrichtung (E) zugeordnete Anfrageeinrichtung zum Anfragen bei dem Anbieter, ob für die Empfängereinrichtung (E) innerhalb eines Lokalitätsraums (Li) zu einem Zeitpunkt (T) Nachrichten (N) vorliegen.

24. Vorrichtung nach Anspruch 23,
**gekennzeichnet durch**
die Anbieterübertragungseinrichtung zum auf das Anfragen ausgeführten Senden vorliegender Nachrichten (N), wobei diese um eine Signatur (S) zum Nachweis der Urheberschaft des Anbieters und dessen Zugehörigkeit zu den Nachrichten (N) ergänzt sind.

25. Vorrichtung nach Anspruch 22 bis 24,
**gekennzeichnet durch**
die der Empfängereinrichtung (E) zugeordnete Anfrageeinrichtung zum Anfragen bei einem Schlüsselbereitsteller, ob für den Lokalitätsraum (L) zu dem Zeitpunkt (T) gültige öffentliche Schlüsselzertifikate (Z) vorliegen.

26. Vorrichtung nach Anspruch 22 bis 25,
**gekennzeichnet durch**
die Schlüsselbereitstellungseinrichtung (SB) zum auf das Anfragen ausgeführten Übertragen von für den Lokalitätsraum (L) gültigen öffentlichen Schlüsselzertifikaten (Z) zu der Empfängereinrichtung (E).

27. Vorrichtung nach Anspruch 22 bis 26,
**gekennzeichnet durch**
die Empfängereinrichtung (E) zum mittels der Schlüsselzertifikate (Z) ausgeführten Überprüfen der Signatur (S) jeder empfangenen Nachricht (N) und Verifizieren oder Falsifizieren der jeweiligen Nachricht (N) entsprechend einem Ergebnis des Überprüfens.

28. Vorrichtung nach Anspruch 22 bis 27,
**gekennzeichnet durch**
die Empfängereinrichtung (E) zum Prüfen der Gültigkeit der empfangenen Schlüsselzertifikate (Z) hinsichtlich des richtigen Lokalitätsraums (L) und des richtigen Zeitpunkts (T).

## Claims

1. Method for protecting a plurality of location-related messages (N), which are transmitted by at least one provider (A) to a plurality of temporally changing recipients and/or temporally changing receiver facilities (E) in at least one specific locality (L), **characterised by** the steps:
- transmission carried out by the provider (A) of messages exhibiting in each case a signature (S) as proof of the creatorship of the respective provider (A) and its belonging to the respective message (N), to at least one specific locality (L) ;
- provision carried out by at least one key provider (SB) of public key certificates (Z), valid for the respective specific locality (L), for the respective specific locality (L);
- checking carried out by means of the key certificates (Z) of the signature (S) of each received message (N) and verification or determination of the false status of the respective message according to a result of the check.

2. Method according to claim 1,
**characterised in that**
time durations are allocated to the key certificates (Z), for which the key certificates (Z) are valid.

3. Method according to claim 2,
**characterised in that**
the time durations are regular and/or are repeated daily.

4. Method according to one of the preceding claims,
**characterised in that**
a location-time characteristic curve or a temporal change to the locality, for example in size and position, is allocated to the key certificates (Z), for which the key certificates (Z) are valid.

5. Method according to one of the preceding claims,
**characterised in that**
additional items of information are allocated to the key certificates (Z) where these key certificates (Z) and/or further key certificates (Z) are valid.

6. Method according to one of the preceding claims,
**characterised in that**
an additional item of information is allocated to the key certificates (Z), indicating with which type of transmission these key certificates (Z) are valid.

7. Method according to one of the preceding claims,
**characterised in that**
transmission carried out by the provider (A) of the messages (N) to the at least one locality (L) takes place after an interrogation to the provider (A) carried out by means of a receiver facility (E).

8. Method according to claim 7,
**characterised in that**
the first interrogation comprises whether messages (N) are present for the locality (L) at a point in time (t).

9. Method according to one of the preceding claims,
**characterised in that**
the provision carried out by a key provider (SB) of public key certificates (Z) valid for the respective locality (L) takes place by means of their transmission to the respective locality (L) after a second interrogation to the key provider (SB) carried out by means of a receiver facility (E).

10. Method according to claim 9,
**characterised in that**
the second interrogation comprises whether public key certificates (Z) are present which are valid for the locality (L) at a point in time (t).

11. Method according to one of the preceding claims,
**characterised by**
checking the validity of the key certificates (Z) provided in respect of the correct locality (L).

12. Method according to one of the preceding claims 2 to 11,
**characterised by**
checking of the validity of the key certificates (Z) provided in respect of the correct time duration.

13. Method according to one of the preceding claims,
**characterised in that**
the key certificate (Z) exhibits a signature (S) as proof of the creatorship of the respective key provider (SB) and its belonging to the respective key certificate (Z).

14. Method according to one of the preceding claims,
**characterised in that**
the provider (A) is the key provider (SB).

15. Method according to one of the preceding claims,
**characterised in that**
the key certificate (Z) valid for a locality (L) exhibits a reference (R) to a locality description structure for the identification of the locality (L) in a plurality of localities (L).

16. Method according to claim 15,
**characterised in that**
the location description structure is a vector graphic supplemented by absolute location co-ordinates.

17. Method according to claim 15 or 16,
**characterised in that**
the reference (R) exhibits a signature (S) for proof of the creatorship of the locality description structure and its belonging to the respective reference (R).

18. Method according to one of the preceding claims 15 to 17,
**characterised in that**
the locality description structure assigns to each key certificate (Z) valid for a locality (L), additionally, a further security algorithm.

19. Method according to one of the preceding claims,
**characterised in that**
the provision of public key certificates (Z) valid for the respective locality (L) is only carried out for the respective locality (L) if, additionally, an identity of a recipient and/or a receiver facility (E) has been verified.

20. Method according to one of the preceding claims,
**characterised in that**
the plurality of location-related messages (N) are dynamic data for the execution of programs in respective receiver facilities in the specific localities (L).

21. Method according to claim 20,
**characterised in that**
an execution of a program comprises an authorised transmission by means of a transmitter facility allocated to the respective receiver facility.

22. Apparatus for carrying out a method for protecting a plurality of location-related messages (N) as claimed in one of the preceding claims, **characterised by**
- at least one provider transmitter device (A) for the transmitting of messages (N) to a plurality of temporally changing recipients and/or temporally changing receiver facilities (E) in at least one specific locality (L), wherein every message (N) exhibits messages which exhibit a signature (S) for proof of the creatorship of the respective provider (A) and its belonging to the respective messages (N);
- at least one key provider facility (SB), for the provision of public key certificates (Z) valid for the respective specific locality (L), for the respective specific locality (L);
- a checking facility for checking, carried out by means of the key certificates (Z), of the signature (S) of each received message (N) and verification or determination of the false status of the respective message (N) according to a result of the check.

23. Apparatus according to claim 22,
**characterised by**
an interrogation facility, allocated to the receiver facility (E), for interrogating the provider as to whether messages (N) for the receiver facility (E) are present inside a locality (Li) at a point in time (T)

24. Apparatus according to claim 22 or 23,
**characterised by**
the provider transmitter facility for the transmitting of messages (N) present, carried out in response to the interrogation, wherein these are supplemented by a signature (S) for proof of the creatorship of the provider and its belonging to the messages (N).

25. Apparatus according to claim 22 to 24,
**characterised by**
the interrogation facility, allocated to the receiver facility (E), for the interrogating of a key provider as to whether public key certificates (Z) are present for the locality (L) at the point in time (T).

26. Apparatus according to claim 22 to 25,
**characterised by**
the key provider facility (SB) for the transmitting, carried out in response to the interrogation, of public key certificates (Z) valid for the locality (L) to the receiver facility (E).

27. Apparatus according to claim 22 to 26,
**characterised by**
the receiver facility (E) for the checking, carried out by the key certificates (Z), of the signature (S) of each received message (N) and verification or determination of the false status of the respective message (N) according to a result of the check.

28. Apparatus according to claim 22 to 27,
**characterised by**
the receiver facility (E) for the checking of the validity of the received key certificates (Z) in respect of the correct locality (L) and the correct point in time (T).

## Revendications

1. Procédé de sécurisation d'une pluralité de messages (N) se référant aux localités qui sont transmis par au moins un fournisseur (A) à une pluralité de personnes destinataires qui varient dans le temps et/ou de dispositifs de réception (E) qui varient dans le temps dans au moins un espace de localité déterminé (L), **caractérisé par** les étapes suivantes :
- transmission, au moyen du fournisseur (A), à au moins un espace de localité déterminé (L), des messages (N) comportant respectivement une signature (S) pour prouver la paternité du fournisseur respectif (A) et l'appartenance de celui-ci au message respectif (N) ;
- mise à disposition, au moyen d'au moins un fournisseur de clés (SB), de certificats de clés publics (Z), valables pour l'espace de localité (L) respectivement déterminé, pour l'espace de localité (L) respectivement déterminé ;
- contrôle, au moyen des certificats de clés (Z), de la signature (S) de chaque message reçu (N) et vérification ou falsification du message respectif (N) conformément à un résultat du contrôle.

2. Procédé selon la revendication 1, **caractérisé en ce que** sont associées aux certificats de clés (Z) des durées de temps pour lesquelles les certificats de clés (Z) sont valables.

3. Procédé selon la revendication 2, **caractérisé en ce que** les durées de temps sont régulières et/ou se répètent quotidiennement.

4. Procédé selon l'une des revendications précédentes, **caractérisé en ce que** sont associés, aux certificats de clés (Z), un déroulement temporel et spatial ou une modification temporelle, par exemple en taille et en position, de l'espace de localité pour lequel les certificats de clés (Z) sont valables.

5. Procédé selon l'une des revendications précédentes, **caractérisé en ce que** sont associées aux certificats de clés (Z) des informations supplémentaires indiquant où ces certificats de clés (Z) et/ou d'autres certificats de clés (Z) sont valables.

6. Procédé selon l'une des revendications précédentes, **caractérisé en ce qu'**est associée aux certificats de clés (Z) une information supplémentaire indiquant avec quel type de transmission ces certificats de clés (Z) sont valables.

7. Procédé selon l'une des revendications précédentes, **caractérisé en ce que** la transmission des messages (N) au moyen du fournisseur (A) vers l'au moins un espace de localité (L) s'effectue après une première requête au fournisseur (A) effectuée au moyen d'un dispositif de réception (E).

8. Procédé selon la revendication 7, **caractérisé en ce que** la première requête inclut la question s'il y a des messages (N) à un instant (t) pour l'espace de localité (L).

9. Procédé selon l'une des revendications précédentes, **caractérisé en ce que** la mise à disposition, au moyen de l'un fournisseur de clés (SB), de certificats de clés publics (Z) valables pour l'espace de localité respectif (L) s'effectue au moyen de la transmission de ceux-ci à l'espace de localité respectif (L) après une deuxième requête au fournisseur de clés (SB) effectuée au moyen d'un dispositif de réception (E).

10. Procédé selon la revendication 9, **caractérisé en ce que** la deuxième requête inclut la question s'il y a des certificats de clés publics (Z) valables à un instant (t) pour l'espace de localité (L).

11. Procédé selon l'une des revendications précédentes, **caractérisé par** le contrôle de la validité des certificats de clés (Z) mis à disposition quant à l'espace de localité correct (L).

12. Procédé selon l'une des revendications précédentes 2 à 11, **caractérisé par** le contrôle de la validité des certificats de clés (Z) mis à disposition quant à la durée temporelle correcte.

13. Procédé selon l'une des revendications précédentes, **caractérisé en ce que** le certificat de clé (Z) comporte une signature (S) pour prouver la paternité du fournisseur de clés respectif (SB) et l'appartenance de celui-ci au certificat de clé respectif (Z).

14. Procédé selon l'une des revendications précédentes, **caractérisé en ce que** le fournisseur (A) est le fournisseur de clés (SB).

15. Procédé selon l'une des revendications précédentes, **caractérisé en ce que** le certificat de clé (Z) valable pour un espace de localité (L) comporte une référence (R) à une structure de description de localité pour identifier l'espace de localité (L) dans une pluralité d'espaces de localités (L).

16. Procédé selon la revendication 15, **caractérisé en ce que** la structure de description de localité est un graphique vectoriel complété par des coordonnées locales absolues.

17. Procédé selon la revendication 15 ou 16, **caractérisé en ce que** la référence (R) comporte une signature (S) pour prouver la paternité de la structure de description de localité et l'appartenance de celle-ci à la référence respective (R).

18. Procédé selon l'une des revendications précédentes 15 à 17, **caractérisé en ce que** la structure de description de localité associe additionnellement un autre algorithme de sécurité à chaque certificat de clé (Z) valable pour un espace de localité (L).

19. Procédé selon l'une des revendications précédentes, **caractérisé en ce que** la mise à disposition de certificats de clés publics (Z) valables pour l'espace de localité respectif (L) est effectuée pour l'espace de localité respectif (L) uniquement si une identité d'une personne destinataire et/ou d'un dispositif de réception (E) a additionnellement été vérifiée.

20. Procédé selon l'une des revendications précédentes, **caractérisé en ce que** la pluralité de messages en rapport avec la position (N) sont des données dynamiques pour l'exécution de programmes dans des dispositifs de réception respectifs dans les espaces de localités (L) déterminés.

21. Procédé selon la revendication 20, **caractérisé en ce qu'**une exécution d'un programme inclut un envoi autorisé au moyen d'un dispositif d'émission associé au dispositif de réception respectif.

22. Dispositif pour exécuter un procédé de sécurisation d'une pluralité de messages (N) en rapport avec la position selon l'une des revendications précédentes, **caractérisé par**
- au moins un dispositif de transmission de fournisseur (A) pour la transmission des messages (N) à une pluralité de personnes destinataires qui varient dans le temps et/ou de dispositifs de réception (E) qui varient dans le temps dans au moins un espace de localité déterminé (L), chaque message (N) comportant une signature (S) pour prouver la paternité du fournisseur respectif (A) et l'appartenance de celui-ci au message respectif (N) ;
- au moins un dispositif de mise à disposition de clés (SB) pour mettre à disposition des certificats de clés publics (Z), valables pour l'espace de localité (L) respectivement déterminé, pour l'espace de localité (L) respectivement déterminé ;
- un dispositif de contrôle pour vérifier, au moyen des certificats de clés (Z), la signature (S) de chaque message reçu (N) et pour vérifier ou falsifier le message respectif (N) conformément à un résultat du conrôle.

23. Dispositif selon la revendication 22, **caractérisé par** un dispositif de requête associé au dispositif de réception (E) pour demander au fournisseur s'il y a des messages (N) pour le dispositif de réception (E) dans un espace de localité (Li) à un instant (T).

24. Dispositif selon la revendication 23, **caractérisé par** le dispositif de transmission de fournisseur pour l'émission, en réponse à la requête, de messages présents (N), ceux-ci étant complétés par une signature (S) pour prouver la paternité du fournisseur et l'appartenance de celui-ci aux messages (N).

25. Dispositif selon la revendication 22 à 24, **caractérisé par** le dispositif de requête associé au dispositif de réception (E) pour demander à un fournisseur de clés s'il y a des certificats de clés publics (Z) valables à l'instant (T) pour l'espace de localité (L).

26. Dispositif selon la revendication 22 à 25, **caractérisé par** le dispositif de mise à disposition de clés (SB) pour transmettre au dispositif de réception (E), en réponse à la requête, des certificats de clés publics (Z) valables pour l'espace de localité (L).

27. Dispositif selon la revendication 22 à 26, **caractérisé par** le dispositif de réception (E) pour vérifier, au moyen des certificats de clés (Z), la signature (S) de chaque message reçu (N) et pour la vérification ou la falsification du message respectif (N) conformément au résultat du contrôle.

28. Dispositif selon la revendication 22 à 27, **caractérisé par** le dispositif de réception (E) pour contrôler la validité des certificats de clés reçus (Z) quant à l'espace de localité correct (L) et à l'instant correct (T).
